**Europäisches Patentamt**

**European Patent Office**

**Office européen des brevets**

(19)

(11) Veröffentlichungsnummer: **0 189 588**
**B1**

(12) **EUROPÄISCHE PATENTSCHRIFT**

(45) Veröffentlichungstag der Patentschrift:
23.11.89

(51) Int. Cl.⁴: **A01N 25/02**

(21) Anmeldenummer: **85116492.1**

(22) Anmeldetag: **23.12.85**

(54) **Herbizide Mischung.**

(30) Priorität: **29.01.85 CH 389/85**

(43) Veröffentlichungstag der Anmeldung:
**06.08.86 Patentblatt 86/32**

(45) Bekanntmachung des Hinweises auf die Patenterteilung:
**23.11.89 Patentblatt 89/47**

(84) Benannte Vertragsstaaten:
**AT CH DE FR GB LI**

(56) Entgegenhaltungen:
**EP-A- 0 110 660**
**GB-A- 2 131 694**
**US-A- 3 974 218**

(73) Patentinhaber: **F. HOFFMANN-LA ROCHE AG,**
**Postfach 3255, CH-4002 Basel(CH)**

(72) Erfinder: **Roth, Willy, Dr., verstorben(CH)**

(74) Vertreter: **Aschert, Hubert et al,**
**Grenzacherstrasse 124 Postfach 3255,**
**CH-4002 Basel(CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die vorliegende Erfindung betrifft eine herbizide Mischung in Form eines Konzentrates, bzw. einer aus einem solchen Konzentrat durch Verdünnung hergestellten gebrauchsfertigen Formulierung, auf Basis von Tebutam als herbizidem Wirkstoff, gegebenenfalls zusammen mit anderen Wirkstoffen, und einem Lösungsmittel.

Mit "Tebutem" bzw. auch mit "Butam" wird die Substanz N-Benzyl-N-isopropylpivalamid, ein bekanntes Herbizid bezeichnet. Es sind auch Formulierungen dieser Substanz in organischen Lösungsmitteln, beispielsweise in Alkylbenzolen, Alkylnaphthalinen und Cycloparaffinen bekannt. So ist beispielweise aus der U.S.-A 3.974.218 eine Lösung von Tebutam in Xylol bekannt, welche zusätzlich Emulgatoren enthält. Derartige Formulierungen sind jedoch nur beschränkt verwendbar, da sie nur ungenügend kältebeständig sind, und bereits bei Temperaturen von etwa +5°C Kristallisation eintreten kann.

Der vorliegenden Erfindung lag die Aufgabe zugrunde, ein Lösungsmittel bzw. ein Lösungsmittelgemisch zu finden, welches die Herstellung eines kältebeständigen emulgierbaren Konzentrates mit einem hohen Gehalt an Tebutam (bis etwa 85%-Gew./Vol) ermöglicht. Dieses Lösungsmittel bzw. Lösungsmittelgemisch sollte es auch erlauben, weitere Wirkstoffe, insbesondere weitere herbizid wirkende Stoffe, welche die Wirkung des Tebutam zu ergänzen, zu erweitern oder zu synergisieren vermögen, in einer an Wirkstoffen möglichst hoch konzentrierten Formulierung unterzubringen. Solche Wirkstoffe sind beispielsweise das unter der Kurzbezeichnung Napropamid bekannte 2-($\alpha$-Naphthoxy)-N,N-diäthylpropion-amid, das unter der Bezeichnung Metazachlor bekannte 2-Chlor-N-(pyrazol-1-ylmethyl)acet-2',6'-xylidid und das unter der Kurzbezeichnung Trifluralin bekannte 4-(Trifluormethyl)-2,6-dinitro-N,N-dipropylanilin.

Es wurde nun im Rahmen der vorliegenden Erfindung überraschenderweise gefunden, dass Propylencarbonat (4-Methyl-1,3-dioxolan-2-on) den genannten Anforderungen an das Lösungsmittel gerecht wird und die Herstellung eines kältebeständigen Konzentrates mit hohem Wirkstoffgehalt ermöglicht.

Die erfindungsgemässe herbizide Mischung ist somit im wesentlichen dadurch gekennzeichnet, dass das Lösungsmittel im wesentlichen aus Propylencarbonat besteht.

Zusätzlich kann das Lösungsmittel noch Methanol und/oder Nitromethan enthalten. Die Verwendung von Methanol oder von Nitromethan allein, ist im Hinblick auf die sicherheitstechnischen Daten dieser Substanzen (niedrige Flammpunkte, Explosionsgefahr) nicht angezeigt.

Gemäss einer besonderen Ausführungsform der erfindungsgemässen herbiziden Mischung wird das Lösungsmittel von einem Gemisch aus Propylencarbonat und Methanol gebildet.

Das Tebutam kann als alleiniger Wirkstoff der erfindungsgemässen herbiziden Mischung verwendet werden, oder es kann diese Mischung neben dem Tebutam noch weitere Wirkstoffe, insbesondere weitere herbizid wirksame Substanzen, wie Napropamid, Metazachlor und/oder Trifluralin enthalten.

Ferner können die erfindungsgemässen herbiziden Mischungen auch noch weitere biozid wirksame Substanzen, beispielsweise Fungizide oder Insektizide enthalten.

In Form von Konzentraten enthalten die erfindungsgemässen herbiziden Mischungen den herbiziden Wirkstoff, bzw. das herbizide Wirkstoffgemisch, zweckmässig in einer Menge von etwa 40 bis etwa 85% (Gew./Vol.), vorzugsweise in einer Menge von etwa 50 bis 75% (Gew./Vol.).

Die erfindungsgemässen herbiziden Mischungen können ferner noch Formulierungshilfsstoffe, wie Emulgatoren, UV-Absorber, Geruchsstoffe, Farbstoffe und dergleichen enthalten. Als Emulgatoren kommen insbesondere in Betracht, das Polyarylphenol-(15)-äthoxylat, das Ricinusöl-(30-40)-äthoxylat und das Oleylalkohol-(10)-äthoxylat, sowie Calciumdodecyldensosulfonat. Die erfindungsgemässen Mischungen können selbstverständlich auch noch andere Emulgatoren und oberflächenaktive Substanzen enthalten.

Die erfindungsgemässen emulgierbaren Konzentrate können in einfacher Weise durch Vermischen der einzelnen Komponenten hergestellt werden und aus diesen Konzentraten kann man in bekannter Weise durch Verdünnen Anwendungsformen herstellen, welche zur Unkrautbekämpfung eingesetzt werden können. Beispielsweise können solche Konzentrate, wenn sie mit Emulgatoren versetzt sind, durch Emulgieren in Wasser in gebrauchsfertige Emulsionen übergeführt werden. Sie können aber auch unverdünnt im sogenannten ULV-Verfahren (ultra low volume), zur direkten Applikation, z.B. vom Flugzeug aus, verwendet werden.

In den folgenden Beispielen beziehen sich die Mengenangaben auf g/1.

### Beispiel 1

| Tebutam (100%) | | 720 |
|---|---|---|
| Polyarylphenol-(15)-äthoxylat | | 30 |
| Calciumdodecylbenzolsulfonat | | 45 |
| Methanol | | 80 |
| Propylencarbonat | zu | 1000 ml |

### Beispiel 2

| Tebutam (100%) | | 380 |
|---|---|---|
| Metazachlor (100%) | | 160 |
| Ricinusöl-(30–40)-äthoxylat | | 50 |
| Calciumdodecylbenzolsulfonat | | 25 |
| Propylencarbonat | zu | 1000 ml |

Beispiel 3

| Tebutam (100%) | | 540 |
|---|---|---|
| Napropamid (90%) | | 250 |
| Oleylalkohol-(10)-äthoxylat | | 50 |
| Calciumdodecylbenzolsulfonat | | 50 |
| Propylencarbonat | zu | 1000 ml |

Beispiel 4

| Tebutam (100%) | | 500 |
|---|---|---|
| Trifluralin (100%) | | 240 |
| Ricinusöl-(30–40)-äthoxylat | | 50 |
| Calciumdodecylbenzolsulfonat | | 40 |
| Propylencarbonat | zu | 1000 ml |

Beispiel 5

| Tebutam | | 500 |
|---|---|---|
| Trifluralin | | 200 |
| Napropamid | | 100 |
| Ricinusöl-(30–40)-äthoxylat | | 60 |
| Calciumdodecylbenzolsulfonat | | 30 |
| Propylencarbonat | zu | 1000 ml |

Alle diese emulgierbaren Konzentrate stellen klare Lösungen dar, welche bei -5°C praktisch unbeschränkt kältebeständig sind.

## Patentansprüche

1. Herbizide Mischung in Form eines Konzentrates bzw. einer aus einem solchen Konzentrat durch Verdünnen hergestellten gebrauchsfertigen Formulierung, auf Basis von N-Benzyl-N-isopropylpivalamid (Tebutam) als herbizidem Wirkstoff, gegebenenfalls zusammen mit anderen Wirkstoffen, und einem Lösungsmittel, dadurch gekennzeichnet, dass das Lösungsmittel im wesentlichen aus 4-Methyl-1,3-dioxolan-2-on (Propylencarbonat) besteht.

2. Herbizide Mischung nach Anspruch 1, dadurch gekennzeichnet, dass das Lösungsmittel zusätzlich noch Methanol und/oder Nitromethan enthält.

3. Herbizide Mischung nach Anspruch 1 oder 2, dadurch gekennzeichnet, daß das Lösungsmittel ein Gemisch aus 4-Methyl-1,3-dioxolan-2-on (Propylencarbonat) und Methanol ist.

4. Herbizide Mischung nach Anspruch 1, 2 oder 3, dadurch gekennzeichnet, daß es neben N-Benzyl-N-isopropylpivalamid (Tebutam) als weiteren Wirkstoff 2-(α-Naphthoxy)-N,N-diäthylpropionamid (Napropamid), 2-Chlor-N-(pyrazol-1-ylmethyl)-acet-2',6'-xylidid (Metazachlor) und/oder 4-(Trifluormethyl)-2,6-dinitro-N,N-dipropylanilin (Trifluralin) enthält.

5. Herbizide Mischung nach Anspruch 1 in Form eines Konzentrates, dadurch gekennzeichnet, daß es den herbiziden Wirkstoff in einer Menge von 40–85% (Gew./Vol.), vorzugsweise in einer Menge von 50–75% (Gew./Vol.) enthält.

6. Verfahren zur Herstellung einer herbiziden Mischung nach einem der Ansprüche 1–5, dadurch gekennzeichnet, daß man die einzelnen Komponenten miteinander vermischt und das erhaltene Konzentrat gegebenenfalls durch Verdünnen in eine als herbizides Mittel gebrauchsfertige Formulierung überführt.

## Claims

1. A herbicide mixture in the form of a concentrate or a ready-for-use formulation prepared from such a concentrate by dilution, based on N-benzyl-N-isopropylpivalamide (tebutam) as the herbicidally active substance, if desired together with other active substances, and a solvent, characterized in that the solvent consists essentially of 4-methyl-1,3-dioxolan-2-one (propylene carbonate).

2. A herbicide mixture according to claim 1, characterized in that the solvent additionally contains methanol and/or nitromethane.

3. A herbicide mixture according to claim 1 or 2, characterized in that the solvent is a mixture of 4-methyl-1,3-dioxolan-2-one (propylene carbonate) and methanol.

4. A herbicide mixture according to claim 1, 2 or 3, characterized in that it contains 2-(α-naphthoxy)-N.N-diethylpropionamide (napropamide), 2-chloro-N-(pyrazol-1-ylmethyl)-acet-2',6'-xylidide (metazachlor) and/or 4-(trifluoromethyl)-2,6-dinitro-N,N-dipropylaniline (trifluralin) as further active substances in addition to N-benzyl-N-isopropylpivalamide (tebutam).

5. A herbicide mixture according to claim 1. in the form of a concentrate, characterized in that it contains the herbicidally active substance in an amount of 40–85% (wt./vol.), preferably in an amount of 50–75% (wt./vol.).

6. A process for the manufacture of a herbicide mixture according to any one of claims 1–5, characterized by mixing the individual components with one another and, if desired, converting the concentrate obtained by dilution into a formulation which is ready-for-use as a herbicidal agent.

## Revendications

1. Mélange herbicide à l'état de concentré ou de composition prête à l'emploi, préparée par dilution d'un tel concentré, contenant en tant que substance active herbicide le N-benzyl-N-isopropylpivalamide (Tebutam) éventuellement avec d'autres substances actives, et un solvant, caractérisé en ce que le solvant consiste essentiellement en la 4-méthyl-1,3-dioxolanne-2-one (carbonate de propylène).

2. Mélange herbicide selon la revendication 1, caractérisé en ce que le solvant contient en outre du méthanol et/ou du nitrométhane.

3. Mélange herbicide selon la revendication 1 ou 2, caractérisé en ce que le solvant consiste en un mélange de 4-méthyl-1,3-dioxolanne-2-one (carbonate de propylène) et de méthanol.

4. Mélange herbicide selon la revendication 1, 2 ou 3, caractérisé en ce qu'il contient en tant qu'autres substances actives, en plus du N-benzyl-N-isopropylpivalamide (Tebutam), le 2-(alpha-naphtoxy)-N,N-diéthylpropionamide (Napropamid), le 2-chloro-N-(pyrazole-1-ylméthyl)-acéto-2',6'-xylidide (Metazachlor) et/ou la 4-(trifluorométhyl)-2,6-dinitro-N,N-dipropylaniline (Trifluralin).

5. Mélange herbicide selon la revendication 1, à l'état de concentré, caractérisé en ce qu'il contient la substance active herbicide en quantité de 40 à 85% (en poids/volume), de préférence en quantité de 50 à 75% (en poids/volume).

6. Procédé de préparation d'un mélange herbicide selon l'une des revendications 1 à 5, caractérisé en ce que l'on mélange entre eux les composants individuels et, le cas échéant, on convertit le concentré obtenu, par dilution, en une composition prête à l'emploi en tant que produit herbicide.